Europäisches Patentamt

European Patent Office

Office européen des brevets

(19)

(11) Publication number: **0 146 004**
**B1**

(12) **EUROPEAN PATENT SPECIFICATION**

(45) Date of publication of patent specification: **27.09.89**

(51) Int. Cl.⁴: **G 11 B 15/60,** G 11 B 15/38,
B 65 H 23/24, F 16 C 32/06

(21) Application number: **84114146.8**

(22) Date of filing: **23.11.84**

(54) Air bearing for moving webs.

(30) Priority: **12.12.83 US 560716**

(43) Date of publication of application:
**26.06.85 Bulletin 85/26**

(45) Publication of the grant of the patent:
**27.09.89 Bulletin 89/39**

(84) Designated Contracting States:
**BE DE FR GB NL SE**

(56) References cited:
**EP-A-0 040 464**
**CH-A- 599 893**
**FR-A-2 430 908**

(73) Proprietor: **UNISYS CORPORATION**
**1, Burroughs Place**
**Detroit Michigan 48232 (US)**

(72) Inventor: **Ball, Karl**
**3440 Louis Dr.**
**Newbury Park, CA 91360 (US)**

(74) Representative: **Eisenführ & Speiser**
**Martinistrasse 24**
**D-2800 Bremen 1 (DE)**

Courier Press, Leamington Spa, England.

## Description

This invention relates to an air bearing for pneumatically supporting and guiding a moving web segment, preferably a recording tape in a tape drive, as it is directed about an outside turn and bent in a convex configuration, this means including a convex air-bearing-surface with one or more troughs therein adapted to impel pressurized gas against the passing web segment, each said trough being defined by air-containing side-walls. The invention particularly relates to a precision air bearing means for supporting a magnetic tape in a recording/reproducing apparatus.

From FR—A—24 30 908 an air bearing of this kind for supporting and guiding a moving paper web is known.

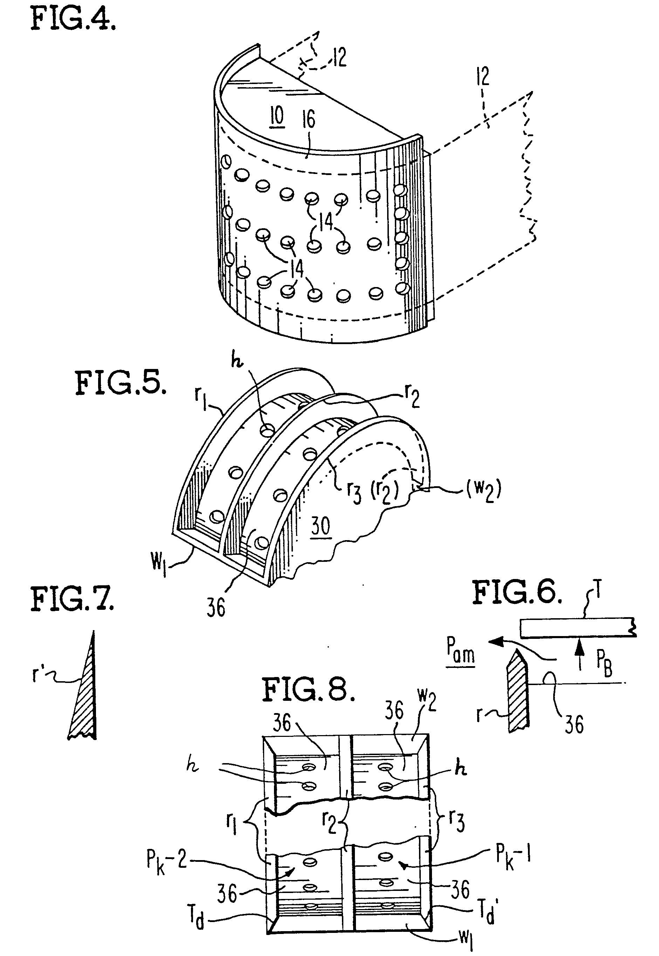

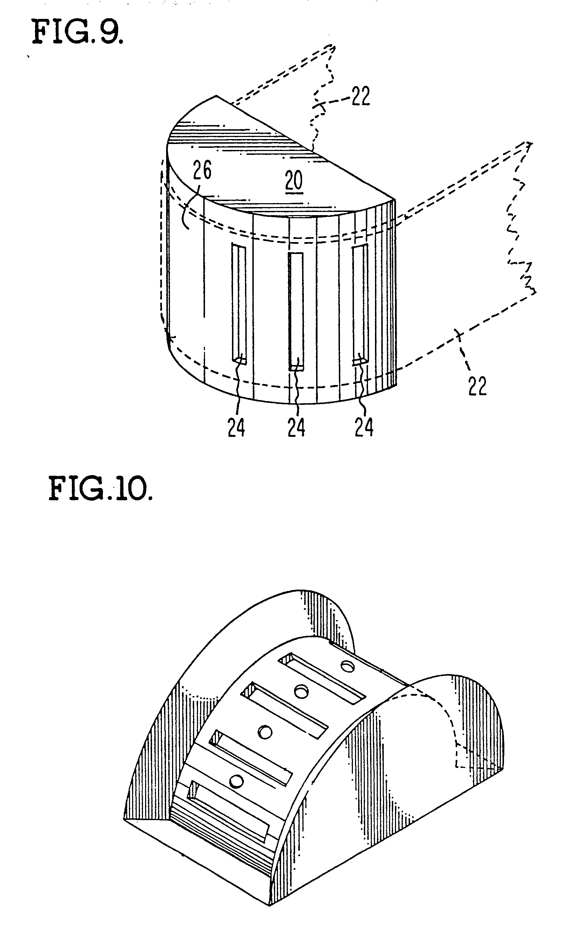

Presently it is relatively common in the art of high density magnetic recording on tape to provide air bearing adapted to support the tape web and to divert it quite precisely along a prescribed path. That is, air bearings are bearing surfaces which support a load on a layer or cushion of air. Air bearings used in magnetic tape transports support the magnetic tape as it changes direction in the tape path. Usually these bearings are supplied with air from an air pump housed in the tape drive. A typical design 10 is shown in Figures 4 and 9. This class of bearing is semicircular and has holes 14 (Fig. 4) in the surface 16 leading from a supply chamber or plenum. When the tape 12 is drawn in tension, it rides over the air bearing surface 16, supported by the air pressure beneath.

Workers have presumed that such air bearing means must afford a very stiff supporting air film to render high speed tape transit properly smooth and relatively insensitive to (minor) variations in tape tension. Workers have felt that, if an air film was too spongy or soft, a change in tape tension could change the thickness of the bearing film and thus change the dynamic characteristics of tape path or cause the flying tape to ground—something catastrophic for the associated precision magnetic recording! (That is, as tape tension increased, the radius of the tape path would decrease). Workers have felt that a relatively stiff air bearing film would, on the other hand, help it maintain nominal film-thickness despite variations in tape tension.

As workers know, the design of such air bearings is traditionally a mix of art and science. Today, the need is for ever-smaller bearing structures, along with more cost-effective performance—something posing very difficult trade-offs for the designer. For instance, it is quite difficult to set an optimum flow of air mass and also keep tape flying height within a narrow range for a given pump and air bearing design.

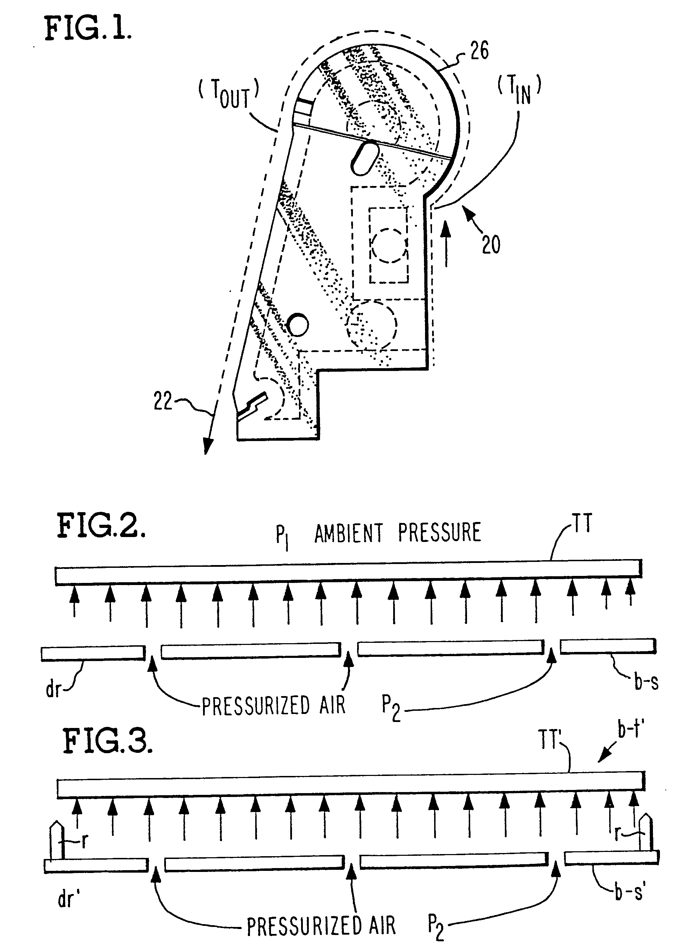

One particularly difficult problem has been that of tape grounding or touchdown (cf. description below of a prior art air bearing, in Fig. 1, describing the characteristic tape path and the problems of touchdown at $T_{in}$ and especially at $T_{out}$, etc.). As bearing pressure is reduced, touchdown will occur at some point, usually at $T_{in}$ and $T_{out}$ points, as workers may not know.

Now, workers recognize that is vitally important in air bearing design to secure predictability of performance. Some complex air bearings for tape transports have allowed the tape to touch down on the bearing surface—yet workers much prefer to avoid this because it risks damaging the (surface of the) tape or bearing. Of course, this is most problematic because the air flow between tape and moving surfaces is so thin (miniscule ratio of height-to-length).

Designers of such air bearings characteristically prefer that the pressure distribution under the tape be essentially constant over the whole bearing surface.

### Deep trough concept

As best seen in Fig. 2, the bearing pressure will unfortunately vary rather widely from tape edge to tape edge across a conventional air-bearing surface. This is shown in an exaggerated sense at Fig. 2 where one will assume a tape segment TT moving above an air bearing surface b-s, with tape TT assumed as (at least slightly) buckled across its medial portions—there, the inner pressure p2 will be understood as relatively greater than ambient air pressure p1 than just beyond the tape edges. Now, when such a bearing surface b-s' (here idealized—Fig. 3) is modified to include a trough, such as trough b-t' (defined by side-walls r and end-walls—see Fig. 10, discussed below) with tape TT' flying past overhead, it may be assumed that the pressures are as indicated by the vectors under tape TT'; that is, the bearing pressure remains relatively more constant in the medial portions of the tape due to the relatively tiny lateral escape area on each side. Now, as the air escapes from under the tape, workers will infer that pressure must drop from the trough pressure p2 to ambient pressure p1 over some specific rim distance $d_r$. It is a feature of the subject invention to minimize this rim distance $d_r$ and also to characterize the air bearing surface by one or several relatively deep troughs having side walls which are not only narrow ($d_r$ minimized) but are relatively pointed or sharp so as to maximize the pressure drop between trough and ambient air (maximal negative pressure gradient across min. $d_r$).

That is, for such a fixed wrap on bearing surface, performance can be improved (e.g., wear reduced) by raising purposely-thin side-walls and at least one end-wall (skirt of constant heights, surrounding air bearing surface)—to define one or several troughs thereon positively demarking the elevated-pressure, under-tape zone from ambient. The thin-wall-enclosure (trough)—rather surprisingly—makes the pressure distribution under the tape much more uniform, especially adjacent tape-edges (e.g., as explained elsewhere—see Figs. 2, 3).

And such thin-wall trough enclosures enable one to maximize the air-pressure drop over a minimal distance (max. $\nabla P$, min. wall-thickness)

so that—again surprisingly—the passing tape seems much less liable to touch down, especially at entry-, exit-sites (where the tape is in transition from a straight-path to a constant-radius bend).

Rough-finish bearing surface (vs conventional as in Fig. 4)

As workers will recognize, the high acceleration/ high velocity tape drive arrangements of most concern here have proceeded well beyond the original relatively crude pulley-guide stage to where it is presently assumed that a precision-finish air bearing surface is absolutely necessary; e.g., for diverting tape about an outside corner. Such a conventional arrangement will be understood as (idealistically shown in Fig. 4) comprising an outside air bearing 10 having a very carefully dimensioned, highly polished bearing surface 16 in which a prescribed number of like, precision-dimensioned air holes 14 are arranged in a certain pattern, so that a passing tape web 12 (in phantom) can be diverted and guided there along with relatively no friction or drag, being supported by the miniscule air film so developed (i.e., relatively constant flying height on the order of micro inches, e.g., see U.S. 3,984,039 to Hawley et al.). Such precision-finish surfaces are presumed necessary today—e.g., for accelerating a tape from virtually a standstill to several hundred inches per second (ips), e.g., from 0.3 ips to about 200 ips (ca. 0.8 cm/ sec to about 510 cm/sec) in just a few milliseconds. Workers recognize that such high-speed high-acceleration tape drives typically must include air bearing surfaces which are finished to be ultra-smooth in very painstaking, very fussy, expensive processes, having closely controlled radius tolerances, etc.

The invention, on the other hand, will be seen as a radical departure from such air bearing rules allowing one to use a rough-finish/deep trough air bearing surface, i.e., one that is quite simple, inexpensive, and easy to fabricate (e.g., a molded plastic surface which needn't be finished at all-)—something quite surprising in the art, as workers will attest. Indeed, my deep trough bearing requires, essentially, that one merely box-in a relatively crude air-flow bearing surface with proper walls (and avoid touch down in any case).

Further, while my deep trough bearings function like the precision finish conventional bearings, they avoid the need for any such precision-finish of the air bearing surface.

Slotted surface bearing (Fig. 1)

Another conventional approach to rendering such high-speed high-acceleration air bearings is indicated in Fig. 1 (see also Fig. 9 for idealized depiction) where, in an air bearing 20 analogous to that in Fig. 4, the smooth, carefully-dimensioned, carefully-finished surface 26 across which a tape web segment 22 is to be flown, is interpersed with slotted gas vents 24 adapted for injection of pressurized air (to support the passing tape 22, as is well understood in the art).

Fig. 1 shows a full exemplary plan view of such a relatively conventional air bearing, with the path of the passing tape web 22 very schematically and idealistically shown as a dotted line, with the entry point $T_{in}$ and the exit point $T_{out}$ being indicated, and with the intermediate (slotted) bearing surface 26 understood as defining the wrap of the so-supported tape.

Workers in the art will recognize that, when a tape drive of this kind is moving a typical magnetic recording tape at about 254 cm/sec (100 ips), the tape is all to apt to touch down, or contact the bearing surface 26 at the entry and exit points ($T_{in}$, $T_{out}$), while flying on the order of a few mils ($10^{-3}$ inch) above surface 26 and with high air throughput (requiring a relatively large capacity air pump).

By comparison, a precision-finish bearing can reduce, or eliminate, such touchdown but is enormously more expensive and fussy to produce, requiring a carefully controlled micro-inch flying height, etc., etc., as mentioned above. The invention, as described below, will be seen to obtain the superior results of a precision-finish bearing without its associated expense, etc., as mentioned above; and will even allow one to resort to a slotted surface configuration (as in Fig. 9, with one or more troughs added of course), yet without serious danger of touchdown or related problems, and without the need for a high capacity pump. The invention does this in a relatively simple design, unlike conventional air bearings, while yet maintaining a relatively constant pressure under the tape.

The invention achieves this by the features as defined in claim 1.

Brief description of the drawings

These and other features and advantages of the present invention will be appreciated by workers as they become better understood by reference to the following detailed description of the present preferred embodiments which should be considered in conjunction with the accompanying drawings, wherein like reference symbols denote like elements;

Fig. 1 depicts in general plan view an air bearing for a tape drive apparatus;

Fig. 2 is a conceptual representation of conventional air-pressure distribution under tape or a relatively conventional air bearing, while Fig. 3 shows the same, with a preferred embodiment of the invention;

Fig. 4, Fig. 9 and Fig. 11 are isometric views of conventional air-bearing surfaces;

Fig. 5 is an isometric view of such, modified according to a preferred embodiment; this being depicted in flattened-out, plan partial-view in Fig. 8, with Fig. 6 showing a modified version of a side-wall portion thereof, and Fig. 7 showing a further modification of such a side-wall;

Fig. 10 is analogous to Fig. 5, with the inlet-apertures modified

Fig. 12 is analogous to Fig. 5, with many surface-pockets shown (rather than only one);

Fig. 13 is analogous to Fig. 1 with an embodiment adder; Fig. 14 shows this in side-view.

Description of the preferred embodiment
General description, background

Fig. 5 schematically illustrates an air bearing constructed according to principles of this invention. This, and other air bearing means discussed herein, will generally be understood as constructed and operating as presently known in the art, except where otherwise specified. And, except as otherwise specified, all materials, methods and devices and apparatus herein will be understood as implemented by known expedients according to present good practice.

Detailed description

Fig. 5 is a perspective view of a portion of a novel deep trough air bearing 30, according to the invention. This bearing will be understood as essentially the same as air bearing 10 described above, except as otherwise specified. Air bearing 30 includes a convex tape-guiding (air-flow) surface 36 (shown idealistically in flattened-out plan view in Fig. 8), including air inlets h (holes) and at least one deep trough pocket. Here, two pockets $P_K$-1, $P_K$-2 are depicted, each being defined by an exit wall $w_1$ and, preferably, an entry wall $w_2$, plus a pair of thin side-walls or ribs (outer ribs $r_1$, $r_3$, with intermediate rib $r_2$ shared in common), as further discussed below. Thus, a single deep trough (or pocket P) may be visualized as defined by walls $w_1$, $w_2$ and ribs $r_1$, $r_3$, with this being split into two like troughs $P_K$-1, $P_K$-2 by intermediate rib $r_2$, as workers will understand.

Pockets $P_K$-1, $P_K$-2 are better depicted in Fig. 8, where the air-bearing surface 36 will be visualized as flattened-out. It is important to note that the end-walls (i.e., entrance wall $w_2$ and exit wall $w_1$) should, especially, be made as thin and as pointy (or knife-like) as possible—so that the bend on a passing tape segment can be executed as quickly as possible (i.e., go from a straight path, or infinite-radius-path, as induced by ambient pressure, to the constant, predictable bend-radius along the pockets—this is to avoid touchdown on entrance or exit!). This is less critical for the side-walls $r_1$, $r_3$.

Workers will be surprised at this! It is the opposite from what is presently desired; i.e., a pocketed surface with sharp, knife-like edges that would horrify most designers (e.g., for fear of accidentally cutting the tape if it contacts the bearing—vs the ultra-smooth, micro-polished bearing surface that workers presently go to great pains to provide!).

Now, as before, bearing surface 36 includes air-inlets h and is adapted for generating a thin air film to guide and support passing segments of magnetic tape adapted to be transported under the mentioned high velocity/high acceleration mode, as is known in the art, e.g., with tension on the order of 1.9—2.2 N (7—8 oz.). While bearing surface 36 might be used with the various widths of tapes and might be adjusted in size depending upon tape width, the bearing will be found particularly useful for supporting wide magnetic tape, e.g. 25—76 mm (1—3 inches) as is often used on the rotating head tape recording technology—for instance, if the tape were approximately 69 mm (2.7 inches), the guiding surface 36 of bearing 30 would have a width of approximately 13 mm (0.5 inches) and a radius of the order of 5—25 mm (0.2—1.0 inches).

As mentioned, the inlet apertures (air holes) h will be of uniform size and spacing (e.g., for convenience of tooling and equal air distribution), being generally as is conventional in the art, except that here, hole-spacing is not critical, and the total cross-sectional hole-area $HA_t$ will be a constant for all bearings used in a given air-bearing situation (the number, size, etc. of individual holes being variable within this constant factor). In most cases, it will be preferable to mount the air supply to holes h via a relatively deep, long, buffer-plenum or pool, or several such, as known in the art. (Or one can substitute slots, etc. for round holes h, as long as the total escape-aperture $HA_t$ is constant).

The diameter of holes h in the surface 36 of bearing 30 would typically range from about 0.8—1.5 mm (30 to 60 mils), and may be placed in any known pattern, as workers will appreciate. As shown, there is at least one row of holes h along each of the deep troughs, uniformly and symmetrically arranged between walls $w_1$, $w_2$ and the side ribs (one row usually suffices). Alternative aperture shapes, patterns and sizes will be contemplated. There is nothing particularly critical in the hole-pattern chosen, just as long as one delivers a uniform air-film-support of the tape along surface 36.

The walls and ribs will be understood as essentially orthogonal to surface 36 and may be of various widths, but are preferably made as thin and narrow as possible, e.g., on the order of 0.5—1.3 mm (20—50 mils). This is most important for the end-walls $w_1$, $w_2$—less so for the side-walls ($r_1$, $r_3$, Fig. 5). Optimally, the outer exposed tip of each outer partition (rib $r_1$, $r_3$, walls $w_1$, $w_2$) will be sharp and pointed (knife-like) as in Fig. 6 so as to establish a maximally-sharp discontinuity between ambient pressure $P_{am}$ and bearing pressure $P_b$ (in the trough between passing tape T and bearing surface 36).

Such thin, pointed edges, defining the trough area, should be understood as very important in general—and in particular as a means of avoiding touchdown, especially at the end-walls (see $w_1$, $w_2$, Fig. 8, with corner lengths $T_d$, $T_d'$ being minimized since touchdown usually occurs there first—evidently touchdown is most likely where the tape segment traverses a bend-transition very quickly, passing from a zone of constant, predictable radius (bend constant) to a zone of infinite radius (straight path).

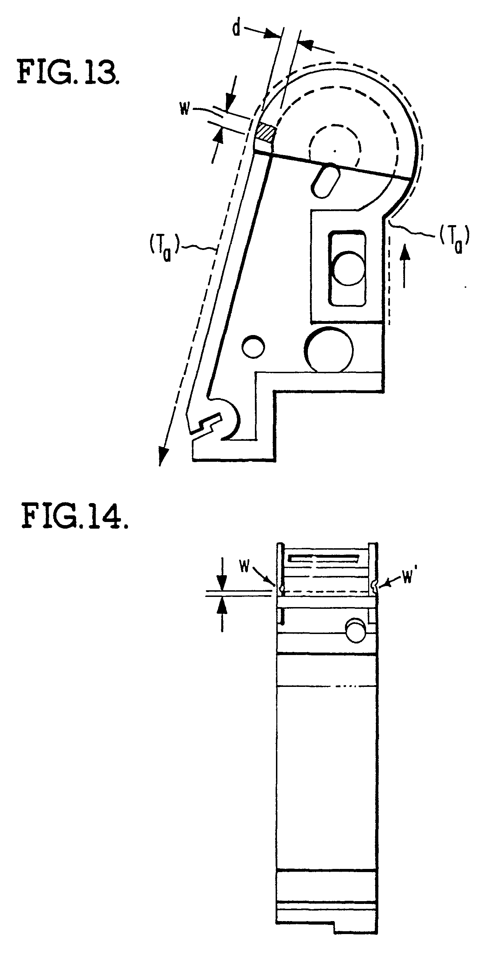

Figs. 13, 14 depict the air-bearing of Fig. 1 modified with a deep-pocket insert b at the exit-end of the air-bearing surface. Slight wear-marks w, w' are indicated in Fig. 14 (90° displaced from view of Fig. 13) where passing tape ($T_a$) is understood as having touched-down.

Alternatively, other sharp point configurations are feasible for the partition edges, such as the asymmetric delta configuration shown sectionally for rib r' in Fig. 7. Workers will recognize that, whether one or several channels is so presented on bearing surface 36, the so-improved bearing will have a deep channel (or deep trough) configuration with sharp pointed, thin-walled outer partitions defining the outer trough dimensions.

Among the many advantageous results, including those mentioned above, will be a considerably more predictable air bearing structure, one that is easy to analyze, one involving relatively simple, easy-to-solve equations and facilitating prediction of bearing performance (e.g., effects of the air outflow from the relatively high pressure bearing $P_b$ to the lower pressure ambient $P_{am}$, see Fig. 6). Of course, bearing pressure $P_b$ must be sufficient to prevent "tape touchdown" or other contact vs bearing 30, as workers well understand.

Preferably, the exposed edges of the outer partitions (walls $w_1$, $w_2$ and outer ribs $r_1$, $r_3$) will be made as sharp as possible to accentuate the change in pressure as mentioned. Of course, the side-walls or ribs $r_1$, $r_2$, etc., are provided only to define (one or more) deep troughs and are not needed for mechanical strength. The partitions are definitely to avoid any sliding contact with the tape (e.g., should air flow through holes h be interrupted)—especially since most are preferably made sharp and likely to cut the tape. Workers will find this quite unexpected in that sharp edges and the like have been strictly avoided heretofore on virtually all air bearing surfaces! The side-walls (e.g., $r_1$, $r_2$, $r_3$) needn't be precisely perpendicular to the bearing surface 36. Also, they may be replaced by rounded mounds, dots, pimples, etc. (instead of a continuous wall)—anything affording proper containment of the trough-air.

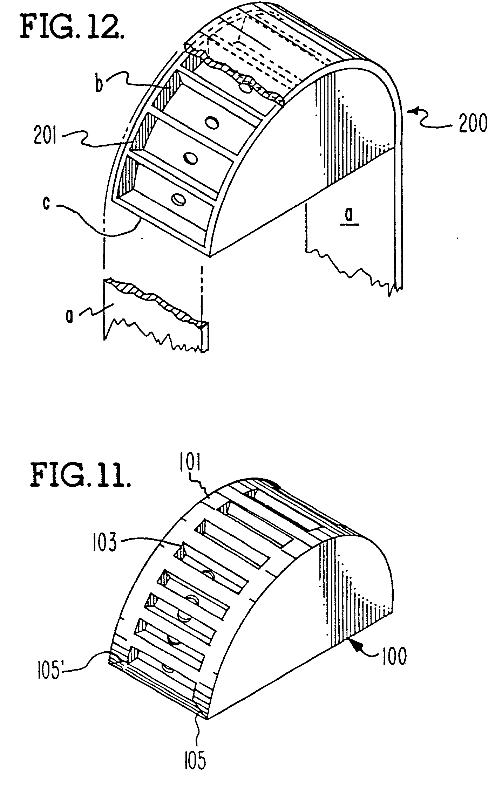

Now, workers should appreciate that merely providing air-pockets on an air-bearing surface, without also so making thin-sharp end walls, will not prove very satisfactory. For example, consider Fig. 11 where an air bearing 100 is idealizedly depicted comprising an air-bearing surface 101 including a number of air pockets 103, each provided (via holes) with a like in-flow of pressurized tape-supporting air (analogous to the smooth bearing surface in Fig. 4).

But with no thin, sharp end-walls as above taught, problems can result—especially touchdown (usually at corners 105, 105', on either end—Note: the pressure grad is most gentle and least discontinuous here!).

Of course, my pocketed bearing surfaces are: quite easy to analyze, and easy and inexpensive to fabricate (e.g., by molding or casting—no polishing, etc., required).

Now, slightly modifying this bearing 100 to include thin, sharp peripheral walls, especially end-walls—according to the invention can improve results markedly (e.g., eliminate touchdown). Such is schematically depicted in Fig. 12, an idealized showing of an air bearing 200 which is like the above air bearings (e.g., circular or semicircular) but deviates by introducing the air into a large chamber which is bounded by the tape (a), by thin flanges on the sides (b), and by thin end-walls c at the entrance and exit areas of the bearing. Thin ribs 201 are placed between the flanges b to define a number of troughs. The thin walls and flanges allow air pressure during escape thereof to change abruptly as it exits (between the tape and the flanges or walls). This effect is enhanced by forming walls and flanges which come to a sharp point. While the wall or flange should be made as thin as possible, the minimum thickness is limited by the structural strength of the bearing and by production considerations.

Advantages over conventional designs have been mentioned. That is, in this design, air pressure is evenly distributed under the tape from the center of the well to the outside flange of the bearing, where it abruptly changes pressure to ambient pressure. (Over areas of constant pressure the curvature of a tape remains constant). In the air bearing design of Fig. 4, the pressure drops gradually from the center of the small inlet holes to the outside edge of the tape. Consequently, the radius of curvature changes slightly from the center of the holes to the outside edge of the tape. The design of Fig. 11 has the same disadvantage because the pressure drops between the troughs and the outside edge of the tape.

Also, my design allows the tape curvature to go from no curvature to constant curvature (as the tape enters and leaves the bearing surface) in a very short distance. When this condition is not assured, the tape may touch down at points of tape entry and exit on the bearing. Such a problem is typical of the Fig. 1 design. This may be a problem with the design of Fig. 4, depending upon the placement of the holes at the entrance and exit of the bearing.

Further, my design is more easily modelled and analyzed. All flows may be modelled by convenient, relatively straightforward orifice flow equations. Workers will appreciate this.

Workers may contemplate employing such a troughed air bearing for a variable-wrap-angle situation: however, I prefer not to use it for such (unless means are also provided to maintain relatively constant air-pressure under the tape at all exit/entry angles).

It may be surprising that a single trough will suffice in many cases, while in other cases, a plurality of relatively identical troughs will be preferred in certain cases (e.g., to accommodate a variable-wrap; cf. Fig. 12). Also, a single trough and one which uses slots instead of holes is acceptable for many cases (e.g., see Fig. 10).

Further modifications of the invention are also possible. For example, the means and methods disclosed herein are applicable to magnetic tape drives, video tape systems and the like. Also, the present invention is applicable for providing the air bearings required in other forms of recording and/or reproducing systems, such as those in which data is recorded and reproduced optically.

The above examples of possible variations of the present invention are merely illustrative. Accordingly, the present invention is to be considered as including all possible modifications and variations coming within the scope of the invention as defined by the appended claims.

**Claims**

1. Air bearing for pneumatically supporting and guiding a moving web segment, preferably a recording tape in a tape drive, as it is directed about an outside turn and bent in a convex configuration, including a convex air-bearing-surface with one or more troughs therein adapted to impel pressurized gas against the passing web segment, each said trough being defined by air-containing side-walls ($r_1$, $r_2$, $r_3$; $r_1'$, $r_3'$), characterized in that each trough is further defined by at least one end-wall ($w_1$, $w_2$; $w_1'$; c) being made sufficiently thin and sharp that a severe discontinuity in gas-pressure is created at the end-wall and web-touchdown avoided,

2. Air bearing as recited in claim 1 wherein each trough is provided with pressurized gas via prescribed inlet aperture means.

3. Air bearing as recited in claim 2 wherein the inlet aperture means comprises at least one row of openings aligned along the air-bearing-surface in the direction of web-passage and having a prescribed total aperture area $A_T$.

4. Air bearing as recited in claim 3 wherein the air-containing side-walls ($r_1$, $r_2$, $r_3$; $r_1'$, $r_3'$) are made sufficiently thin and sharp that a prescribed severe discontinuity in gas-pressure is created above the side-walls and web-touchdown avoided.

5. Air bearing as recited in claim 4 for a tape drive wherein two such troughs are so defined, each extending along the direction of the tape passage, with a common intermediate rib ($r_2$) separating them.

**Patentansprüche**

1. Luftlagerung zum pneumatischen Stützen und Führen eines bewegten Streifenabschnittes, vorzugsweise eines Aufzeichnungsbandes eines Bandantriebes, um eine Außenkurve konvexer Form; mit einer konvexen Luftlagerfläche, die einen oder mehrere darin ausgebildete Tröge aufweist, über die Druckgas gegen den vorbeilaufenden Streifenabschnitt zugeführt wird, wobei jeder Trog durch luftführende Seitenwände ($r_1$, $r_2$, $r_3$, $r_1'$, $r_2'$) begrenzt wird; dadurch gekennzeichnet, daß jeder Trog außerdem mindestens eine Endwand ($w_1$, $w_2$, $w_1'$; c) aufweist, die genügend dünn und scharf ausgebildet ist, um durch einen Abbruch im Gasdruck an der Endwand ein Anliegen des Streifenabschnittes zu vermeiden

2. Luftlager nach Anspruch 1, dadurch gekennzeichnet, daß jeder Trog über entsprechend dimensionierte Einlaßöffnungsmittel mit Druckgas versorgt wird.

3. Luftlager nach Anspruch 2, dadurch gekennzeichnet, daß die Einlaßöffnungsmittel mindestens eine Reihe von Öffnungen enthält, die entlang der Luftlagerfläche in Richtung des Vorbeilaufs des Streifenabschnittes ausgerichtet sind und eine entsprechend dimensionierte Gesamtöffnungsfläche $A_T$ aufweist.

4. Luftlager nach Anspruch 3, dadurch gekennzeichnet, daß die luftführenden Seitenwände ($r_1$, $r_2$, $r_3$; $r_1'$, $r_3'$) ausreichend dünn und scharf ausgebildet sind, um durch einen gezielten Abbruch im Gasdruck oberhalb der Seitenwände ein Anliegen des Streifenabschnittes zu vermeiden.

5. Luftlager nach Anspruch 4 für einen Bandantrieb, dadurch gekennzeichnet, daß zwei solcher Tröge vorgesehen sind, von denen jeder sich entlang der Bandbewegungsrichtung erstreckt, und daß eine gemeinsame dazwischenliegende Rippe ($r_2$) beide Tröge voneinander trennt.

**Revendications**

1. Palier pneumatique pour soutenir et guider de manière pneumatique un segment de bande qui se déplace, de préférence une bande d'enregistrement dans le cas d'une unité à bande, lorsque la bande contourne l'extérieur et est pliée suivant une configuration convexe, ce dispositif comportant une surface de palier pneumatique convexe avec une ou plusieurs goulottes destinées à projeter le gaz comprimé contre le segment de bande qui passe, chaque goulotte étant définie par des parois latérales de retenue d'air ($r_1$, $r_2$, $r_3$; $r_1'$, $r_3'$), dispositif caractérisé en ce qu'au moins une paroi d'extrémité ($w_1$, $w_2$; $w_1'$; c) est rendue suffisamment mince et à arête vive de façon à créer une discontinuité stricte de la pression du gaz au niveau de la paroi d'extrémité et pour éviter le contact.

2. Palier pneumatique selon la revendication 1, caractérisé en ce que chaque goulotte comporte un orifice d'entrée prédéterminé pour le gaz comprimé.

3. Palier pneumatique selon la revendication 2, caractérisé en ce que l'orifice d'entrée se compose d'au moins une rangée d'orifices alignés le long de la surface de palier pneumatique, dans la direction du passage de la bande et ces ouvertures donnent une surface d'ouverture totale prédéterminée $A_T$.

4. Palier pneumatique selon la revendication 3, caractérisé en ce que les parois latérales de retenue d'air ($r_1$, $r_2$, $r_3$; $r_1'$, $r_3'$) sont suffisamment minces et affûtées pour créer une discontinuité sévère, prescrite de la pression du gaz au-dessus des parois latérales en évitant ainsi le contact de la bande.

5. Palier pneumatique selon la revendication 4, destiné à une unité à bande, caractérisé en ce que de telles goulottes sont définies, chacune s'étendant dans la direction de passage de la bande avec une nervure intermédiaire commune ($r_2$) qui les sépare.

**FIG.1.**

$(T_{OUT})$     26     $(T_{IN})$

20

22

**FIG.2.**     $P_1$   AMBIENT PRESSURE     TT

dr

PRESSURIZED AIR    $P_2$     b-s

**FIG.3.**     TT'     b-t'

r     r

dr'     b-s'

PRESSURIZED AIR    $P_2$

1

EP 0 146 004 B1

FIG.4.

FIG.5.

FIG.7.

FIG.6.

FIG.8.

2

## FIG.9.

## FIG.10.

# FIG. 12.

b

201

c

a

200

a

# FIG. 11.

101

103

105'

100

105

4

FIG.13.

FIG.14.